# EUROPEAN PATENT APPLICATION

(11) **EP 0 903 967 A1**
(43) Date of publication of application: **24.03.1999**
(21) Application number: 97830460.8
(22) Date of filing: 19.09.1997
(51) Int. Cl.: H05B 41/29, H05B 41/38

(54) **An igniter for discharge lamps**

(71) Applicant: Quality Light Electronics S.A.S. Di Francesco Celso E C., 10121 Torino (IT)
(72) Inventor: Miniotti, Maurizio, 10050 Meana Di Susa (Torino) (IT)
(74) Representative: Bosotti, Luciano

(57) **Abstract**

The igniter device is intended to be used with a discharge lamp (18) having an associated supply circuit (14) capable of providing the lamp (18) with a supply signal (V_{AL}). The igniter device (10) includes a primary circuit (12) with associated oscillator means, usually constituted by one or more solid state electronic switches (28, 30) for inducing a controlled oscillation in the primary circuit (12). Electromagnetic coupling means (22) such as, for example, a so-called superimposing transformer, enable the said controlled oscillation to be transferred to the said supply circuit (14), acting as a secondary circuit, inducing resonance in this circuit with the consequent striking of a discharge arc in the lamp (18).

## Description

The present invention concerns an igniter for a discharge lamp (or arc lamp, the two terms being considered equivalent to each other in this context) according to the preamble of the principal claim.

These lamps are currently used in a multiplicity of fields in which characteristics of high luminance and quality of radiation are required, for example, in cinematography and television, photography, medical and scientific applications and as light sources in a wide range of projectors.

During normal operation, these lamps are supplied with a voltage of several tens or hundreds of volts (which will be referred to below with the term supply voltage) so as to maintain an electric arc between the electrodes of the lamp. Depending on the model, they require either a DC or an AC supply, this latter being at mains frequency (50-60 Hz) with wider variation being possible, especially where it is provided by a generator set.

On starting, whether cold or hot, the arc must be struck by ionising the insulating dielectric constituted by the gas filling the lamp bulb, so as to generate a flashover which can then be maintained over time by the supply voltage. As an initial flashover of sufficient duration and energy for ignition cannot be obtained by means of the supply voltage alone, discharge lamps are normally provided with igniter devices (usually referred to simply as "igniters") capable of supplying the electrodes with a high ignition voltage of the order of kilovolts.

In the current state of the art, to ensure ignition in any conditions, and thus even including when in the hot state, shortly after the lamp has been turned off, when the pressure inside the bulb is high and the dielectric resistance to the discharge is also high, igniters are used that are capable of generating ignition voltages of several tens of kilovolts.

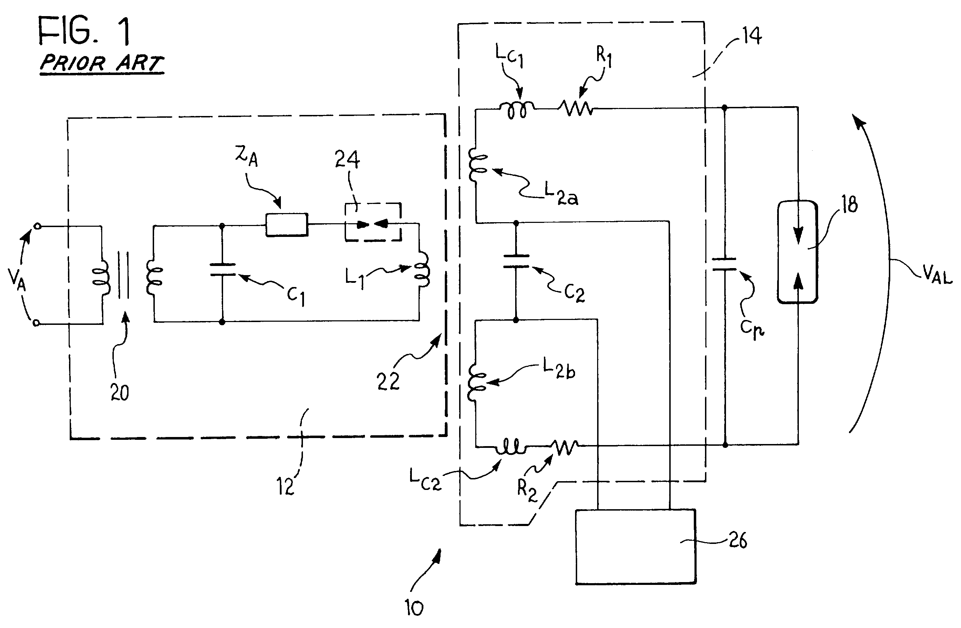

A circuit diagram of an igniter according to the art, associated with a supply circuit for a discharge lamp, is illustrated in the accompanying Figure 1. This igniter generally indicated with the reference number 10) is conventionally known as a "superimposed" igniter due to its particular mode of operation which comprises superimposing the discharge striking voltage during the start-up phase over the supply voltage provided for its operating phase. A primary circuit 12 and secondary circuit 14 can be identified in the overall circuit of the igniter 10, and the secondary circuit 14 coincides with the supply circuit for the lamp 18 thus justifying the name adopted.

The igniter device 10 receives an input voltage V_{A} for charging an ignition capacitor C₁. When the voltages required to ignite the lamp are high (several tens of kilovolts), the capacitor C₁ is charged with a voltage of the order of kilovolts using, for example, a transformer (represented in the drawings with the reference numeral 20) to boost the input voltage V_{A}. For models of lamps in which the ignition voltages are more modest (several kilovolts), it is not necessary to use the transformer 20 to charge up the capacitor C₁: it can be charged directly from the input voltage V_{A} across an impedance or, for example, by means of a voltage doubler. The capacitor C₁ is arranged in parallel with the primary winding L₁ of a transformer 22 across a spark gap 24. The charge voltage of the capacitor is also present across the insulated electrodes of the spark gap.

When this voltage exceeds a threshold determined by the electrical characteristics of the spark gap, a flashover establishes between the electrodes of this latter, which closes the circuit formed by the capacitor C₁ and the primary winding L₁ of the transformer 22. The inductance L₁ is of the order of just a few microhenrys so that it acts as a short-circuit for frequencies below the megahertz values. The current which the capacitor C₁ discharges into the inductance L₁ is limited only by the series impedance of the network constituted by C₁, L₁ and the spark gap, here indicated Z_{A}, and assumes very high values (kiloamperes).

The current pulse generated at the primary winding of the transformer 22 in this way induces a corresponding current in the secondary winding which, in the particular embodiment shown in Figure 1, is divided into two symmetrical portions L₂ₐ and L_{2b}. The two winding portions L₂ₐ and L_{2b} are connected in series with each other via a capacitor C₂, the series circuit formed by the two portions L₂ₐ and L_{2b} of the secondary winding of the transformer 22 and the capacitor C₂ being connected in series with the lamp 18.

The capacitor C₂ is intended to separate the ignition voltage (the dominant harmonic component of which is constituted by frequencies of the order of megahertz) from the power supply 26, operating either at frequencies of a few tens or a few hundreds of hertz or at DC, so that this latter is not affected by the ignition mechanism, which could damage it: in practice, the capacitor C₂ behaves like a short circuit for the ignition pulse.

The current induced in the secondary winding of the transformer 22 flows in a circuit formed by the inductances L₂ₐ and L_{2b}, the inductances (L_{c1}, L_{c2}) of the cables which lead to the lamp 18 from the igniter 10, the resistances R₁ and R₂ of these cables, and the parasitic capacitance Cₚ seen by the output of the igniter and caused by the cables of the igniter and the electrodes of the lamp 18 itself.

The igniter is initially calibrated so that its constituent components interact with the parasitic capacitance Cₚ to generate the high voltage necessary to produce the ignition across the electrodes of the lamp 18.

Very low values are usually chosen for the inductances of the windings L₂ₐ and L_{2b}. During the normal operation of the lamp 18 supplied by the power supply 26, the windings thus act practically as short circuits, while the capacitor C₂ constitutes an open circuit.

Although now consolidated and reliable, the ignition technique represented in Figure 1 has intrinsic disadvantages, especially from the point of view of the control of the operation. These disadvantages relate principally to the fact that the discharge across the spark gap 24 constitutes an electrical phenomenon which is generally difficult to control, the parameters of which can vary as a function of, for example, the deterioration of the spark gap itself which must periodically be replaced or adjusted. The reliable operation of the arrangement shown in Figure 1 moreover usually requires the igniter 10 to be adjusted in order to take into consideration the specific installation conditions (the length of the supply cables etc).

Other than that, the discharge at the electrodes of the spark gap is a source of electromagnetic and acoustic noise. Taking into account the fact that lamps of the type described are often intended to be used in environments where electronic circuits sensitive to electromagnetic noise are present, it must be acknowledged that this arrangement cannot be considered entirely satisfactory.

The object of the present invention is to overcome the aforesaid disadvantages with a solution of innovative character having the characteristics specifically referred to in the following claims.

The invention will now be described, purely by way of non-limitative example, with reference to the accompanying drawings, in which:
Figure 1, which relates to the prior art, has already been described above; and
Figure 2 illustrates an igniter according to the invention, in a manner substantially similar to that of Figure 1.

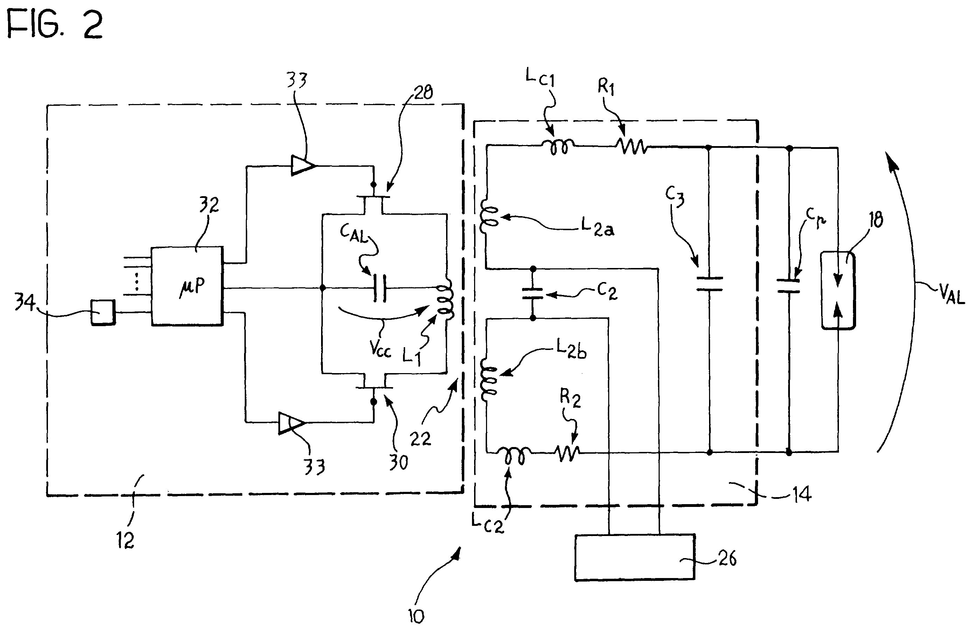

Elements identical or equivalent to those already described above in relation to the prior art have been identified in Figure 2 using the same reference numerals used in Figure 1. The associated characteristics and manner of operation will not therefore be described again below.

Essentially, the solution according to the invention is based on the recognition of the fact that the secondary circuit 14 of the igniter associated with the lamp 18 (this circuit usually also including the supply cables of the lamp itself, and taking into consideration the parasitic capacitances) constitutes a resonant circuit, if appropriately stimulated. Achieving the resonance condition causes the setting across the terminals of the lamp 18 of a voltage sufficient to strike the ignition discharge arc. Consequently, the operation of the igniter 10 according to the invention is based on the generation of a controlled oscillation in the primary circuit 12 of the igniter itself which, on being transferred through the transformer 22 to the secondary circuit 14, is capable of bringing the circuit 14 to the resonant condition and igniting the lamp 18.

A further aspect of the invention is that of controlling the resonant condition in order at the same time to improve the behaviour of the secondary circuit 14, increasing its Q-factor and making the resonant frequency independent of the presence of parasitic parameters. This enables the oscillation of the aforesaid secondary circuit 14 to be stimulated at its own resonance frequency by means of a circuit (the primary circuit 12) involving low voltages (hundreds of volts) and low currents (tens of amperes).

In particular, in the embodiment illustrated, in order to induce controlled oscillation in the primary circuit 12 of the igniter, a circuit is used comprising at least one, and preferably two, electronic switches 28, 30, preferably in the form of transistors such as FET transistors.

In practice, the aforesaid oscillation is induced by alternately opening and closing the said switch or switches 28, 30 in such a way as to control the connection between a voltage V_{cc} present across the terminals of a capacitor C_{AL} and the primary winding L₁ of the transformer 22. The voltage V_{cc} is generally obtained by rectifying the mains voltage and is thus of the order of hundreds of volts.

As has already been said, this result may be obtained using a single switch. A further solution is possible in which the switch or switches is or are positioned directly in the oscillating circuit (the secondary circuit 14). However, the currently preferred embodiment of the invention (shown in Figure 2) envisages the utilisation of two solid state switches 28, 30 connected according to a general counterphase connection scheme and isolated from the oscillating circuit (the secondary circuit 14) by the transformer 22. The capacitor C_{AL} is thus interposed between a common line connecting the switches 28, 30 and an intermediate terminal of the primary winding L₁ which is thus also subdivided into two generally symmetrical parts, each of which is selectively connected to the voltage V_{cc}. The switches are operated for short intervals at a time (tens of microseconds) and must be capable of withstanding currents of tens of amperes.

The switching of the two switches 28 and 30 in counterphase (that is, one switch closed when the other is open) can be controlled very precisely by acting on the associated control electrodes (for example, the grid or gate electrodes, in the case of two FET transistors) using a control device 32 such as a microcontroller or microprocessor, or a simpler dedicated logic circuit (such as, for example, a wired logic circuit) coupled thereto by appropriate driving stages 33.

In particular, the circuit arrangement and the components to which reference has been made allow oscillation to be induced in the primary circuit 12 of the igniter device 10, having a frequency of the order of megahertz (corresponding to the typical frequencies of oscillation of the secondary circuit 14) while retaining the possibility of extremely precise control, by acting on the control electrodes of the switches 28 and 30 (therefore operating under low voltages) of parameters, such as:
- the frequency of the oscillation phenomenon induced in the primary circuit 12 of the igniter 10 (for example, in a range of approximately 1 to 10 MHz);
- the precise control of the frequency of this phenomenon as a function of circuit parameters measured (using known techniques) at the moment of ignition, in such a way as to make it coincide with the actual resonant frequency of the secondary circuit 14 (which frequency, as has already been said, can vary depending on physical parameters, the length of the cables of the lamp 18, and which can even change over time);
- the activation/deactivation of the igniter device 10, in the first case when the loadless voltage supplied by the power supply 26 to the electrodes of the lamp reaches a predetermined threshold value, and in the second case as soon as the lamp 18 has started (this can be detected in different ways according to commonly known criteria, for example, by detecting the power consumption of the power supply 26);
- the exact timing of the activation of the igniter 10, for example, so that it coincides with precisely-determined phase angles of the waveform produced by the power supply 26 when operated in AC (generally 60°-90° and/or 240°-270°, that is, when the supply voltage is just reaching its peak) to facilitate the ignition of the lamp;
- the number of ignition pulses for each half period of the supply voltage V_{AL}, and their duration (so as to achieve the desired ignition voltage also compensating for possible variations in the mains voltage and/or thermal drift of the other physical quantities in play); and/or
- the maximum time for which it is possible to repeat attempts at igniting, with the further possibility of not repeating the attempt and emitting a warning signal whenever ignition is not achieved within the maximum time.

As has already been said, the power supply 26 is usually a power supply operating at mains frequency (50-60 Hz) or at DC. The oscillation induced in the igniter 10 (frequencies of the order of megahertz) therefore constitutes a phenomenon that is much faster than the variation of the supply voltage generated by the power supply 26. This therefore allows the precise control of the intervention of the igniter 10.

In Figure 2, C₃ indicates a capacitor device (if not present for other reasons) arranged in parallel with the lamp 18 and the secondary winding of the transformer 22, with the aim of making the effects of the parasitic capacitances usually present in the circuit negligible in the variations of the resonant frequency of the secondary circuit 14, which, in this way, can be controlled more easily. The introduction of the capacitor C₃ also enables a reduction in the resonant frequency of the circuit 14 when this is considered excessively high for the envisaged mode of use.

Furthermore, by choosing an appropriate value for L₂ₐ and L_{2b}, and using air-wound coils instead of coils on ferrite cores, the Q-factor of the secondary circuit 14 can be improved, thus making it more similar to an ideal LC oscillating circuit than a conventional arrangement in which the coils are designed exclusively to obtain a high transformation ratio. It therefore becomes possible to stimulate oscillation of the secondary circuit 14 in the neighbourhood of the resonant frequency in order to obtain a voltage oscillation on the lamp which increases rapidly until it reaches the ignition voltage.

In the arrangement according to the invention, the acoustic noise generated by the spark gap, which is present in known devices, is also avoided, while the electromagnetic emissions produced are limited to the region of the resonant and supply frequencies.

Finally, the igniter 10 has an activation device associated with the input of the control device 32, by which it can be activated. This device may be in the form of a simple push button 34 as illustrated schematically in Figure 2, or it may comprise signal receiver devices (such as, for example, photodiodes or microphones) for remotely-operated igniters.

Naturally, the principle of the invention remaining the same, the details of manufacture and embodiments may be widely varied with respect to that described and illustrated.

## Claims

1. An igniter device for discharge lamps (18) having an associated supply circuit (14) capable of providing a supply signal (V_{AL}) to the lamp (18), characterised in that the igniter device (10) comprises:
a primary circuit (12) having associated oscillator means (28, 30) for inducing a controlled oscillation in the primary circuit (12), and
electromagnetic coupling means (22) for transferring the said controlled oscillation to the said supply circuit (14) acting as a secondary circuit, inducing its resonance with consequent striking of a discharge arc in the said lamp (18).

2. An igniter device according to Claim 1, characterised in that it also includes control means (32) acting on the said oscillator means (28, 30) to control the said oscillation.

3. An igniter device according to Claim 1 or Claim 2, characterised in that the said oscillator means include at least one switch element (28, 30).

4. An igniter device according to Claim 3, characterised in that the said at least one switch element is a solid state switch (28, 30).

5. An igniter device according to Claim 4, characterised in that the said at least one solid state switch element is a FET-type device (28, 30).

6. An igniter device according to any of Claims 3 to 5, characterised in that the said oscillator means comprise two switch elements (28, 30) connected in a counterphase configuration.

7. An igniter device according to any of Claims 1 to 6, characterised in that the said electromagnetic coupling means (22) are of the inductive type.

8. An igniter device according to Claim 7, characterised in that the said coupling means include a primary winding (L₁) of a transformer capable of being coupled to an associated secondary winding (L₂ₐ, L_{2b}) having a low inductance.

9. An igniter device according to Claim 8, characterised in that the said secondary winding (L₂ₐ, L_{2b}) has a high Q-factor.

10. An igniter device according to Claim 9, characterised in that the said secondary winding (L₂ₐ, L_{2b}) is arranged in series with the said lamp (18) so as to allow the said resonance induced in the secondary circuit (14) to be superimposed over the said lamp supply signal (V_{AL}).

11. An igniter device according to any preceding claim, characterised in that it further includes an element conditioning the resonant frequency (C₃), associated with the said secondary circuit (14) for reducing the value of the resonant frequency of the secondary circuit (14) itself.

12. An igniter device according to Claim 11, characterised in that the said element conditioning the resonant frequency is a capacitor (C₃).

13. An igniter device according to Claim 2, characterised in that the said control means (32) are arranged to induce a predetermined oscillation frequency in the said oscillator means (28, 30).

14. An igniter device according to Claim 13, characterised in that the said predetermined oscillation frequency is preferably between approximately 1 and 10 MHz.

15. An igniter device according to Claim 2, characterised in that the said control means (32) are arranged to activate the said igniter device (10) when the said supply signal (V_{AL}) reaches a predetermined threshold value.

16. An igniter device according to Claim 2, characterised in that the said control means (32) are arranged to deactivate the said igniter device (10) once the lamp (18) has been started.

17. An igniter device according to Claim 2, characterised in that the said control means (32) are arranged to activate the said controlled oscillation by inducing resonance in the said secondary circuit (14) in correspondence with a predetermined phase angle of the said supply signal (V_{AL}).

18. An igniter device according to Claim 17, characterised in that the said control means (32) are arranged to induce the said controlled oscillation a predetermined number of times in correspondence with the said predetermined supply signal phase angle (V_{AL}).

19. An igniter device according to Claim 18, characterised in that the said control means (32) are arranged to induce the said controlled oscillation every time for a predetermined period of time.

20. An igniter device according to Claim 2, characterised in that the said control means (32) are arranged to induce the said controlled oscillation for a maximum predetermined activation time of the said igniter device (10).

21. An igniter device according to any of Claims 13 to 20, characterised in that the said control means (32) acting on the oscillator means comprise a dedicated logic circuit.

22. An igniter device according to any of Claims 13 to 20, characterised in that the said control means acting on the oscillator means comprise a microprocessor control unit (32).

23. An igniter device according to Claim 2, characterised in that it further includes activation means (34) associated with the said control means (32), capable of activating the said igniter device (10).

24. An igniter device according to Claim 23, characterised in that the said activation means comprise a push button (34).

25. An igniter device according to Claim 23, characterised in that the said activation means comprise remote-controlled receiver devices.
